# EUROPÄISCHE PATENTSCHRIFT

(11) **EP 1 554 139 B1**
(45) Veröffentlichungstag und Bekanntmachung des Hinweises auf die Patenterteilung: **09.07.2008**
(21) Anmeldenummer: 03809311.8
(22) Anmeldetag: 23.10.2003
(51) Int. Cl.: B60G 21/055, B60G 17/015, B60G 21/10

(54) **WANKSTABILISATOR FÜR DAS FAHRWERK EINES KRAFTFAHRZEUGS**
ROLL STABILISER FOR THE CHASSIS OF A MOTOR VEHICLE
STABILISATEUR ANTI-VACILLEMENT DESTINE AU CHASSIS D'UN VEHICULE AUTOMOBILE

(30) Priorität: 25.10.2002 DE 10250028
(43) Veröffentlichungstag der Anmeldung: 20.07.2005
(73) Patentinhaber: Schaeffler KG, 91074 Herzogenaurach (DE); LuK Lamellen und Kupplungsbau Beteiligungs KG, 77815 Bühl (DE)
(72) Erfinder: KRAUS, Manfred, 91074 Herzogenaurach (DE); OSTERLÄNGER, Jürgen, 91448 Emskirchen (DE); HOCHMUTH, Harald, 91469 Hagenbüchach (DE); DIRNBERGER, Thomas, 90587 Obermichelbach (DE); REIK, Wolfgang, 77815 Bühl (DE); PFUND, Thomas, 76547 Leiberstung (DE)
(86) Internationale Anmeldenummer: PCT/EP2003/011717
(87) Internationale Veröffentlichungsnummer: WO 2004/037574

(56) Entgegenhaltungen:
- EP-A- 1 057 666
- EP-A- 1 057 667
- WO-A-99/67100
- DE-A- 10 002 455
- DE-A- 10 037 486
- DE-A- 19 846 275
- DE-A- 19 855 343

## Beschreibung

### Gebiet der Erfindung

Die folgende Erfindung betrifft einen Wankstabilisator für das Fahrwerk eines Kraftfahrzeugs. Diese Stabilisatoren haben die Aufgabe die Wankneigung des Aufbaus bei Kurvenfahrt zu verringern und das Kurvenverhalten zu beeinflussen also die Fahrsicherheit zu erhöhen. Im Regelfall bleibt bei gleichseitiger Federung der Stabilisator wirkungslos.

Aus der gattungsgemäßen DE 100 02 455 A1 beispielsweise ist eine Stabilisatoranordnung für das Fahrwerk eines Kraftfahrzeugs bekannt geworden, dessen mit Fremdenergie bedarfsweise beaufschlagbare Aktuator einem Wanken entgegenwirkt. Der Aktuator weist einen elektromechanischen Stellantrieb auf, dessen Rotor eine mit einer Spindelmutter versehene Gewindespindel antreibt. An diesen elektromechanischen Stellantrieb ist ein Getriebe angeschlossen, das eine Längsverschiebung der Spindelmutter auf der Gewindespindel in eine Schwenkbewegung um die Drehachse des Aktuators umwandelt. Der Aktuator ist in diesem Fall zwischen zwei Stabilisatorhälften angeordnet und verdreht diese gegeneinander, um einem Wanken entgegen zu wirken. In der bekannten Anordnung wird als Fremdenergie elektrischer Strom zugeführt, der den Motor des elektromechanischen Stellantriebs antreibt. Es sind aber auch hydraulische Antriebe denkbar, bei denen Hydraulikflüssigkeit unter Druck beispielsweise einen Arbeitskolben bewegt. Diese sogenannten aktiven Wankstabilisatoren müssen relativ große Leistungen bereitstellen, da den unerwünschten Wankmomenten etwa 600 Nm in nur 400 Millisekunden entgegengesetzt werden müssen. Während bei hydraulischen Antriebskonzepten derartige Leistungen aufgrund der hohen Leistungsdichte bei hydraulischen Anwendungen relativ problemlos bereitzustellen sind, unterliegen die elektromechanischen aktiven Wankstabilisatoren praktischen Grenzen. Denn die zur Aufbringung dieser Leistung erforderlichen elektrischen Ströme erreichen bei den üblicherweise installierten 12V Bordnetzen unzulässig hohe Werte, die zu einer unzulässig hohen Erwärmung in den Kabelbäumen führen können. Bei den hydraulischen Anwendungen müssen entsprechend leistungsstarke Pumpen bereitgestellt werden, um die erforderlichen Leistungen bereitstellen zu können, wodurch die Kosten der Wankstabilisator erhöht sind.

Aufgabe der vorliegenden Erfindung ist es, einen aktiven Wankstabilisator nach den Merkmalen des Oberbegriffs des Anspruchs 1 anzugeben, der kostengünstig ist und die Anforderungen an die geforderten Leistungen erfüllt.

Erfindungsgemäß wird diese Aufgabe dadurch gelöst, dass der Aktuator wenigstens einen zusätzlichen Energiespeicher aufweist, dessen Speicherenergie dem Wanken zusätzlich entgegenwirkt. Die erforderliche hohe Leistungsdichte bei dem erfindungsgemäßen Wankstabilisator wird durch den mit Fremdenergie beaufschlagten Stellantrieb gemeinsam mit dem zusätzlichen Energiespeicher aufgebracht. Der zusätzliche Energiespeicher kann beispielsweise durch eine Feder gebildet sein. Grundsätzlich sind alle Energiespeicher einsetzbar, die ihren gespeicherte Energie spontan abgeben können, und die ohne großen Aufwand wieder mit der erforderlichen Energiemenge gefüllt werden können. Im Fallbeispiel einer Feder genügt es demzufolge, wenn diese unter Abwesenheit eines Wankmomentes wieder ihre gespannte Halteposition einnimmt. Bei den bekannten elektromechanischen Antrieben kann somit die erforderliche Leistung des Elektromotors gegenüber bekannten Lösungen deutlich reduziert werden. Demzufolge kann der erfindungsgemäße Wankstabilisator problemlos auch bei solchen Kraftfahrzeugen eingesetzt werden, die mit einem 12V Bordnetz ausgerüstet sind.

Der zusätzliche Energiespeicher ist vorzugsweise in dem Aktuator so installiert, dass dieser seine Energie in einer einzigen Entspannungsrichtung wahlweise einem Wanken in der einen Wankrichtung oder in der entgegengesetzten Wankrichtung entgegensetzt. Wenn beispielsweise-als zusätzlicher Energiespeicher eine Feder eingesetzt wird, die unter Vorspannung in einer komprimierten Form gehalten ist, kann diese unter Entspannung in einzigen Entspannrichtung, nämlich entgegen der Richtung, in der sie komprimiert wurde, ihre Energie abgeben. Weiter unten sind Maßnahmen vorgeschlagen, wie diese Zusatzenergie zum Wankausgleich in den beiden Wankrichtungen eingesetzt werden kann.

Bei Abwesenheit eines Wankmomentes ist der Aktuator in einer Neutralposition, in der der zusätzliche Energiespeicher mit Energie gefüllt ist, die unter Verrichtung von Arbeit einen Wanken entgegengesetzt werden kann, sobald ein Wankmoment anliegt. Vorzugsweise ist daher eine Halteeinrichtung vorgesehen, die den Energiespeicher in einer Neutralposition des Aktuators mit der gespeicherten Energie gefüllt hält.

Vorzugsweise umfasst der als Baueinheit ausgebildete Aktuator einen mit der Fremdenergie beaufschlagbaren Stellantrieb und den zusätzlichen Energiespeicher. Diese erfindungsgemäße Weiterbildung hat den Vorteil, dass der Wankstabilisator als vorgefertigtes Bauelement am Fahrwerk montiert werden kann, beispielsweise zwischen zwei Stabilisatorhälften und dort an diese angeschlossen wird. Derartige Baueinheiten lassen sich in günstiger Weise auch mit elektrischen Steckverbindern ausrüsten, um ein problemlosen Anstecken von Steuerleitungen oder Einspeiseleitungen zu ermöglichen.

Wenn der erfindungsgemäße Wankstabilisator zwischen zwei Stabilisatorhälften eingebaut wird, ist der Aktuator so gebaut, dass eine Verdrehung um seine Drehachse zur Verdrehung der Stabilisatorhälften durchgeführt werden kann.

Der zusätzliche Energiespeicher eignet sich in günstiger Weise zum Einsatz in an sich bekannten Wankstabilisatoren, deren zwischen Stabilisatorhälften wirksam angeordnete Aktuator ein dem Stellantrieb nachgeschaltetes erstes Getriebe aufweist, um einen Stellweg des Stellantriebes bedarfsweise in eine Drehbewegung umzuwandeln, unter der die Stabilisatorhälften um einen Verdrehwinkel um die Drehachse des Aktuators herum zueinander verdreht werden. Der zusätzliche Energiespeicher kann hier seine Energie zur Verdrehung um die Drehachse des Aktuators abgeben.

Eingangs wurde DE 100 02 455 A1 erwähnt, bei dem das erste Getriebe ein erstes Kurvenbahngetriebe umfasst, mit zwei den Stabilisatorhälften zugeordneten Kurvenbahnträgern, in deren sich voneinander unterscheidenden ersten Kurvenbahnen ein mittels des Stellantriebes längs dieser ersten Kurvenbahnen verschiebbares erstes Koppelelement geführt ist. Bei einem derartigen Wankstabilisator kann in einer erfindungsgemäßen Weiterbildung an den beiden Kurvenbahnträgern ein zweites Kurvenbahngetriebe vorgesehen sein, in deren sich voneinander unterscheidenden zweiten Kurvenbahnen ein mittels des zusätzlichen Energiespeichers längs dieser zweiten Kurvenbahnen verschiebbares zweites Koppelelement geführt ist. Bei dieser erfindungsgemäßen Weiterbildung bedarf es zur Ausbildung des zweiten Kurvenbahngetriebes keiner weiteren Kurvenbahnträger. Selbstverständlich ist es möglich, anstelle des zweiten Kurvenbahngetriebes jedes andere Getriebe vorzusehen, um einen axialen Entspannweg des zusätzlichen Energiespeichers in eine Drehbewegung umzuwandeln, unter der die Stabilisatorhälften um den Verdrehwinkel herum zueinander verdreht werden.

Wenn jedoch ein zweites Kurvenbahngetriebe vorgesehen sein soll, bietet es sich in günstiger Weise an, dass die Kurvenbahn etwa V- oder U-förmig ausgebildet ist, wobei beide Kurvenbahnschenkel spiegelsymmetrisch zu einer die Drehachse des Aktuators enthaltenden Längsmittelebene angeordnet sind. Diese erfindungsgemäße Anordnung der Kurvenbahn bietet den wesentlichen Vorteil, dass der zusätzliche Energiespeicher seine gespeicherte Energie in einer einzigen Entspannungsrichtung abgibt. Entweder wird die gespeicherte Energie unter Verrichtung von Arbeit unter Verschiebung des Koppelelementes entlang des einen Kurvenbahnschenkels oder aber entlang des anderen Kurvenbahnschenkels verrichtet, so dass eine Verdrehung der beiden Stabilisatorhälften in dem einen oder im dazu entgegengesetzten Drehsinn möglich ist.

Vorzugsweise vereinigen sich die beiden Kurvenbahnschenkel in einer in der Längsmittelebene enthaltenen Schnittstelle. Wenn das zweite Koppelelement in der Schnittstelle angeordnet ist, ist der zusätzliche Energiespeicher mit Speicherenergie gefüllt. Es bietet sich an, an dieser Schnittstelle die weiter oben bereits erwähnte Halteeinrichtung vorzusehen. Diese Halteeinrichtung kann beispielsweise unmittelbar an dem die etwa V- oder U-förmige Kurvenbahn aufweisenden Kurvenbahnträger ausgebildet sein.

Das zweite Kurvenbahngetriebe weist vorzugsweise eine dem anderen Kurvenbahnträger zugeordnete Kurvenbahn auf, die sich geradlinig parallel zur Drehachse des Aktuators erstreckt. Wenn das zweite Koppelelement gleichzeitig entlang der Kurvenbahnen beider Kurvenbahnträger verlagert wird, findet eine Verdrehung der beiden Kurvenbahnträger zueinander statt, wobei diese Verdrehung der beiden Kurvenbahnträger zueinander zur Verdrehung der angeschlossenen Stabilisatorhälften dient.

Der erfindungsgemäße Wankstabilisator eignet sich in besonders günstiger Weise für die Einbindung elektromechanischer Stellantriebe, deren Elektromotor eine mit einer Spindelmutter versehene Gewindespindel antreibt. Die von dem Elektromotor aufzubringende Leistung im Falle eines Wankens kann um den Betrag reduziert werden, den der zusätzliche Energiespeicher abgibt. Es bietet sich als bauraumsparende Lösung an, wenn als zusätzlicher Energiespeicher eine um die Drehachse des Aktuators herum angeordnete Schraubenfeder vorgesehen ist, die als Zugfeder oder als Druckfeder ausgebildet ist. Die Drehachse des Aktuators ist bei der zuletzt beschriebenen Anordnung zugleich die Drehachse der Gewindespindel. Im Falle der vorgeschlagenen Schraubenfeder mag es zur Einsparung von axialen Platzbedarf zweckmäßig sein, wenn aufeinanderfolgende Windungen der Schraubenfeder unterschiedliche Wickeldurchmesser aufweisen. In diesem Fall können sich die Windungen wenigstens teilweise bei komprimierter Schraubenfeder überlappen, so dass in Blocklage der Schraubenfeder ein erheblich reduzierter axialer Bauraumbedarf erforderlich ist.

Nachstehend wird die Erfindung anhand von zwei in insgesamt fünf Figuren dargestellten Ausführungsbeispielen näher erläutert. Es zeigen:
- Figur 1: einen erfindungsgemäßen Wankstabilisator in perspektivischer Darstellung,
- Figur 2: den erfindungsgemäßen Wankstabilisator im Längsschnitt,
- Figur 3: eine schematische Darstellung der Funktionsweise des erfindungsgemäßen Wankstabilisators mit einer modifizierten Steuerung,
- Figur 4: in schematischer Darstellung einen Längsschnitt durch einen erfindungsgemäßen Wankstabilisator in einer Neutralposition und
- Figur 5: den erfindungsgemäßen Wankstabilisator aus Figur 4 in einer Arbeitsposition.

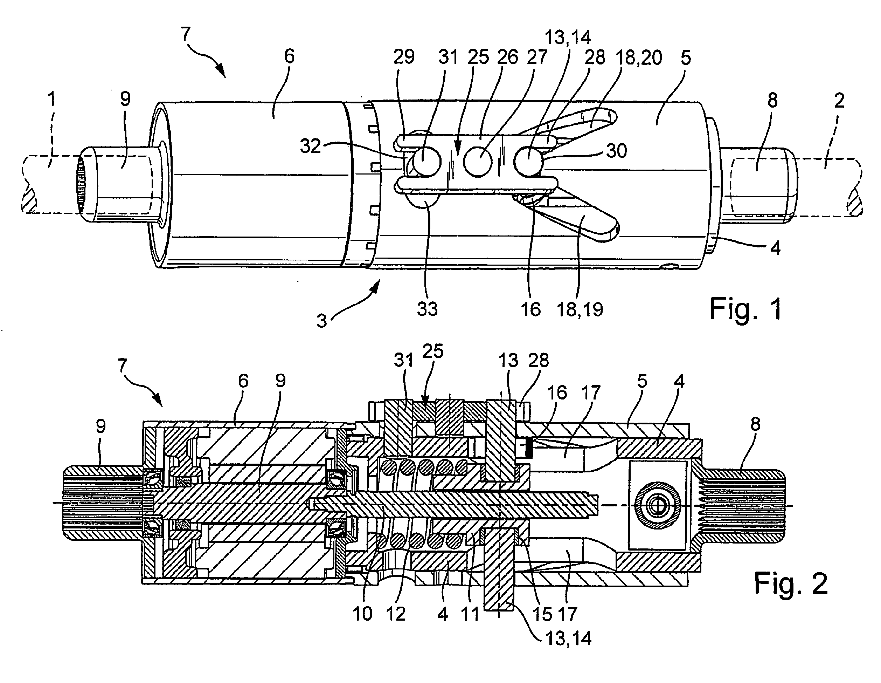

Der in den Figuren 1 bis 3 dargestellte erfindungsgemäßen Wankstabilisator für das Fahrwerk eines Kraftfahrzeuges umfasst Stabilisatorhälften 1, 2, die hier nur gestrichelt dargestellt sind. Zwischen den Stabilisatorhälften 1, 2 ist ein Aktuator 3 angeordnet, der auch das Kernstück der Erfindung darstellt. Der Aktuator 3 verdreht bedarfsweise die beiden Stabilisatorhälften 1, 2 um die Drehachse des Aktuators 3 zueinander.

Der Aktuator 3 weist zwei koaxial ineinander angeordnete Kurvenbahnträger 4, 5 auf. Die beiden Kurvenbahnträger 4, 5 sind rohrförmig ausgebildet und relativ zueinander drehbar. Der äußere Kurvenbahnträger 5 ist mit seinem in der Figur 2 linksseitigen Ende an einem Gehäuse 6 eines Elektromotors 7 befestigt. Der Kurvenbahnträger 4 und das Gehäuse 6 weisen an ihren einander abgewandten stirnseitigen Enden jeweils eine Zapfenaufnahme 8, 9 zur drehfesten Aufnahme der Enden der Stabilisatorhälften 1, 2 auf.

An einem Rotor 9 des Elektromotors 7 ist eine Gewindespindel 10 befestigt. Die Gewindespindel 10 ist koaxial zu den beiden Kurvenbahnträgern 4, 5 angeordnet. Auf der Gewindespindel 10 ist eine Spindelmutter 11 nach Art eines an sich bekannten Kugelgewindetriebes drehbar angeordnet. Eine Relativdrehung zwischen der Gewindespindel 10 und der Spindelmutter 11 wird in eine axiale Bewegung der Spindelmutter 11 gegenüber den Kurvenbahnträgern 4, 5 umgewandelt. Diese Anordnung bildet einen elektromechanischen Stellantrieb 11a.

Eine koaxial auf der Gewindespindel 10 angeordnete Schraubendruckfeder 12 ist einerseits an dem Kurvenbahnträger 4 abgestützt und andererseits gegen die Spindelmutter 11 angefedert. Die Spindelmutter 11 trägt ein Koppelelement 13, das für eine Verdrehung der beiden Kurvenbahnträger 4, 5 zueinander erforderlich ist, wie weiter unten ausgeführt wird. Das Koppelelement 13 umfasst mehrere über den Umfang der Spindelmutter 11 verteilt angeordnete Stellzapfen 14, die sternförmig um die Drehachse des Akutators 3 herum angeordnet sind. Die Stellzapfen 14 sind in Radiallagern 15 um ihre Längsachse herum drehbar an der Spindelmutter 11 aufgenommen. Auf den Stellzapfen 14 sind Stützrollen 16 drehbar gelagert.

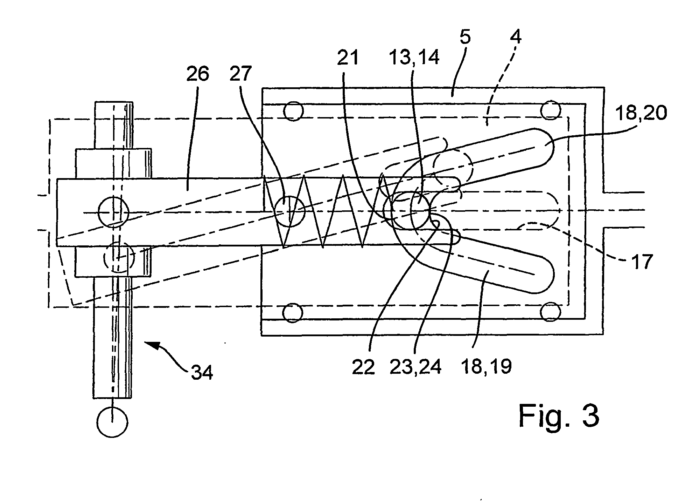

Der Kurvenbahnträger 4 ist an mehren über den Umfang verteilt angeordneten Stellen mit parallel zur Drehachse des Aktuators 3 angeordnete in geradlinigen Kurvenbahnen 17 versehen. Der Kurvenbahnträger 5 ist an mehreren über seinen Umfang verteilt angeordneten Stellen jeweils mit einer V-förmigen Kurvenbahn 18 versehen, deren etwa V-förmig zueinander angeordnete Kurvenbahnschenkel 19, 20 spiegelsymmetrisch zu einer die Drehachse des Aktuators 3 enthaltenden Längsmittelebene angeordnet sind. Die V-förmige Kurvenbahn 18 bzw. deren Kurvenbahnschenkel 19, 20 sind deutlich den Figuren 1 und 3 zu entnehmen. Die Koppelelemente 13 koppeln die beiden Kurvenbahnträger 4, 5 miteinander. Zu diesem Zweck greifen die Stellzapfen 14 jeweils sowohl in die Kurvenbahn 17 als auch in die V-förmige Kurvenbahn 18 ein. Die Stützrollen 16 arbeiten mit der Kurvenbahn 17 zusammen, während die Stellzapfen 14 jeweils mit deren Umfang mit der V-förmigen Kurvenbahn 18 zusammenarbeitet. Auf diese Weise ist ein dem elektromechanischen Stellantrieb 11a nachgeschaltetes erstes Kurvenbahngetriebe 20a gebildet. Die beiden Kurvenbahnschenkel 19, 20 jeder V-förmigen Kurvenbahn 18 schneiden sich in einer in der Längsmittelebene enthaltenen Schnittstelle 21 wie dies in der Figur 3 angedeutet ist. In einer Neutralstellung des Aktuators 3 ist das Koppelelement 14, dass heißt der Stellzapfen 14 in der Schnittstelle 21 angeordnet. Für eine einwandfreie Positionierung des Stellzapfens 14 ist vorliegend an der inneren Wandung 22 der V-förmigen Kurvenbahn 18 eine Halteposition 23 ausgebildet, wie dies der Figur 3 zu entnehmen ist. Diese Halteposition 23 für das Koppelelement 13, dass heißt hier den Stellzapfen 14, ist quer zu der Drehachse des Aktuators 3 angeordnet und bildet ein Plateau 24.

Bei der vorliegenden Erfindung ist der elektromechanische Stellantrieb 11a vorgesehen, der den bereits beschriebenen Elektromotor 7 mit dem angeschlossenen Kugelgewindetrieb beinhaltet. Wenn einem Wanken des Fahrzeugaufbaus entgegengewirkt werden soll, werden bei aktiven Wankstabilisatoren die beiden Stabilisatorhälften entgegen dem wirksamen Wankmoment verdreht. Diese Verdrehung wird vorliegend dadurch erreicht, dass unter Betätigung des Elektromotors 7 die Spindelmutter 11 axial verlagert wird, wobei die jeweils in einer der beiden Kurvenbahnschenkel 19, 20 angeordneten Stellzapfen 14 entlang dieser Kurvenbahnschenkel 19, 20 verlagert werden. Das bedeutet, dass der äußere Kurvenbahnträger 5 gegenüber den Stellzapfen 14 und gegenüber dem Kurvenbahnträger 4 verdreht. Wenn der Stellzapfen 14 in dem Kurvenbahnschenkel 19 angeordnet ist, erfolgt eine Relativdrehung entgegen dem Uhrzeigersinn. Wenn der Stellzapfen 14 in dem Kurvenbahnschenkel 20 angeordnet ist, erfolgt eine Relativdrehung mit dem Uhrzeigersinn.

Je nach der Orientierung des anliegenden Wankmoments muss gewählt werden, in welchen der beiden Kurvenbahnschenkel 19, 20 der Stellzapfen 14 ausgehend von seiner Neutralposition in der Schnittstelle 21 gelenkt werden soll. Zu diesem Zweck ist gemäß den Figuren 1 und 2 eine Steuerung 25 vorgesehen, mittels der das Koppelelement 13 wahlweise aus der Neutralstellung heraus in einen der beiden Kurvenbahnschenkel 19, 20 eingelenkt werden kann. Diese Steuerung 25 umfasst eine Wippe 26, die um eine Wippachse 27 schwenkt. Die Wippachse 27 ist quer zu der Drehachse des Aktuators 3 angeordnet. Das eine Wippenende 28 greift an dem Koppelelement 13 und das andere Wippenende 29 greift an dem anderen Kurvenbahnträger 4 an. Im vorliegenden Ausführungsbeispiel greift der Stellzapfen 14 in eine U-förmige Aufnahme 30 der Wippe 26 an deren Wippenende 28 ein. An dem anderen Wippenende 29 greifen Zapfen 31 jeweils in eine U-förmige Aufnahme 32 am anderen Wippenende 29 ein. Die Wippachse 27 ist an dem Kurvenbahnträger 5 befestigt.

Diese Steuerung 25 kann in vorteilhafter Weise das Wankmoment nutzen, um das Koppelelement 13 in den entsprechenden Kurvenbahnschenkel 19, 20 der V-förmigen Kurvenbahn einzulenken. Wenn beispielsweise unter einem Wankmoment eine Relativdrehung zwischen den beiden Stabilisatorhälften 1,2 im Uhrzeigersinn eingeleitet wird, verschwenkt der Zapfen 31 ebenfalls im Uhrzeigersinn und bewegt sich in Umfangsrichtung gegenüber dem Kurvenbahnträger 5. Diese Relativdrehung gegenüber dem Kurvenbahnträger 5 ist möglich, weil in dem Kurvenbahnträger 5 in Umfangsrichtung ausgebildete Nuten 33 ausgebildet sind, durch die der Zapfen 31 hindurch greift. Die Wippe 26 schwenkt mit ihrem Wippenende 29 nun ebenfalls im Uhrzeigersinn bzw. nach oben, wenn man Figur 1 zugrundelegt. Die Wippe 26 schwenkt nun mit ihrem Wippenende 28 entgegen dem Uhrzeigersinn, also nach unten wenn man Figur 1 zugrundelegt. Unter dieser Schwenkbewegung des Wippenendes 28 wird der Stellzapfen 14 von seiner Halteposition 23 weg und in den Kurvenbahnabschnitt 19 hinein verlagert. Die Schraubenfeder 12 drückt nun die Spindelmutter 11 axial nach rechts. Je weiter das Koppelelement 13 nach rechts verlagert wird, desto größer ist demzufolge die Verdrehung zwischen den beiden Kurvenbahnträgern 4, 5, so dass dem Wankmoment aktiv entgegengewirkt wird.

Die Schraubenfeder 12 ist ein Energiespeicher 33a und entlastet den Elektromotor 7. In der Startphase des Elektromotors 7 unterstützt die vorgespannte Schraubenfeder 12 mit ihrer vollen Vorspannkraft den gewünschten Stellvorgang ein sehr schnelles Verstellen gegen das Wankmoment ist somit möglich. Über eine geeignete Regelung kann nun der Motor 7 derart angesteuert werden, dass nach dem Wegfall des Wankmoments das Koppelelement 13 wieder in seiner Neutralstellung angeordnet ist, wobei dann die Schraubendruckfeder 12 wieder ihre volle Vorspannkraft erreicht hat.

Figur 3 zeigt in schematischer Darstellung eine alternative Steuerung 34, bei der die Wippe 26 über einen elektrisch angetriebenen Stellmotor 35 betätigt wird. Ebenso wie bei der zuvor beschriebenen Steuerung erfolgt eine Auslenkung der Wippe 26 in eine der beiden Drehrichtungen abhängig von dem ermittelten Wankmoment.

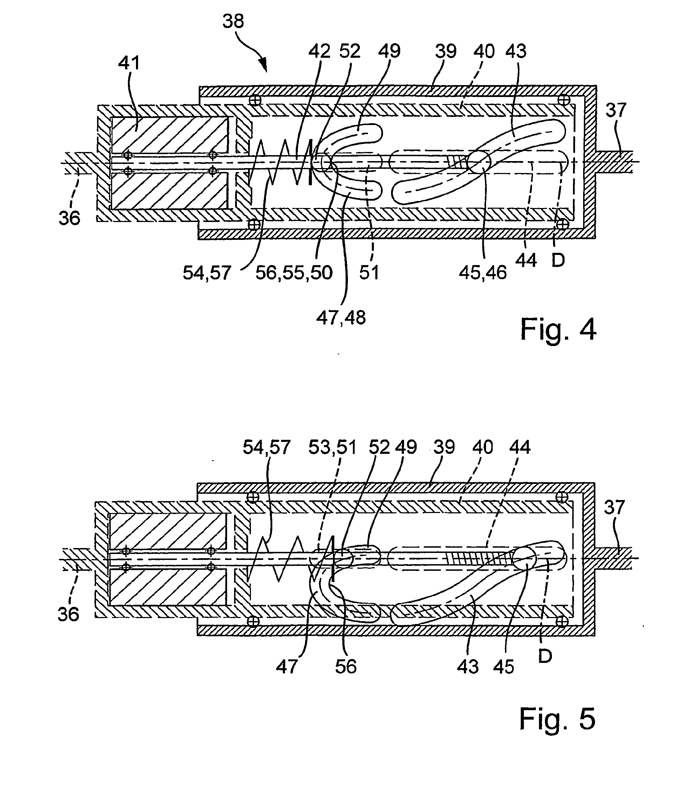

Der in den Figuren 4 und 5 dargestellte erfindungsgemäße Wankstabilisator für das Fahrwerk eines Kraftfahrzeuges umfasst Stabilisatorhälften 36, 37, die hier nur angedeutet sind. Zwischen den Stabilisatorhälften 36, 37 ist ein Aktuator 38 angeordnet, der auch das Kernstück der Erfindung darstellt. Der Aktuator 38 verdreht bedarfsweise die beiden Stabilisatorhälften 36, 37 um die Drehachse D des Aktuators 38 zueinander.

Der Aktuator 38 weist zwei koaxial ineinander angeordnete Kurvenbahnträger 39, 40 auf, die axial unverschieblich aber drehbar zueinander gelagert sind. Die beiden Kurvenbahnträger 39, 40 sind hier etwa rohrförmig ausgebildet. Der äußere Kurvenbahnträger 39 ist mit seinem rechtsseitigen Ende an die Stabilisatorhälfte 37 drehfest angeschlossen, der innere Kurvenbahnträger 40 ist mit seinen linksseitigen Ende an die Stabilisatorhälfte 36 drehfest angeschlossen.

Der innere Kurvenbahnträger 40 beinhaltet einen Elektromotor 41, dessen Rotor eine Gewindespindel 42 antreibt. Auf der Gewindespindel 42 ist eine nicht weiter dargestellte Spindelmutter nach Art eines an sich bekannten Kugelgewindetriebes drehbar angeordnet; mit dieser Anordnung ist ein elektromechanischer Stellantrieb 42a gebildet. Eine Relativdrehung zwischen der Gewindespindel 42 und der Spindelmutter wird in eine axiale Bewegung der Spindelmutter gegenüber den Kurvenbahnträgern 39, 40 umgewandelt.

Der Kurvenbahnträger 39 weist mehrere über den Umfang verteilt angeordnete etwa S-förmige Kurvenbahnen 43 auf, wie dies beispielsweise aus der eingangs erwähnten DE 100 02 455 A1 bekannt ist. Der innere Kurvenbahnträger 40 weist mehrere über den Umfang verteilt angeordnete gradlinige Kurvenbahnen 44 auf, die parallel zur Drehachse D des Aktuators 38 ausgerichtet sind. Auf der Spindelmutter ist ein Koppelelement 45 angeordnet, dass sowohl in die S-förmige Kurvenbahn 43 als auch in die gradlinige Kurvenbahn 44 eingreift. Wenn die Spindelmutter gemeinsam mit dem Koppelelement 45 axial verlagert wird, findet eine Relativverschiebung zwischen dem Koppelelement 45 und den Kurvenbahnen 43 und 44 statt. Das Koppelelement 45 bildet gemeinsam mit den Kurvenbahnen 43, 44 ein erstes Kurvenbahngetriebe 46, das dem elektromechanischen Stellantrieb 42a nachgeschaltet ist.

Der äußere Kurvenbahnträger 39 ist ferner mit mehreren über den Umfang verteilt angeordneten etwa U- oder V-förmigen Kurvenbahnen 47 versehen, deren beiden Kurvenbahnschenkel 48, 49 spiegelsymmetrisch zu einer die Drehachse D des Aktuators 38 enthaltenden Längsmittelebene angeordnet sind. Die beiden Kurvenbahnschenkel 48, 49 vereinigen sich in einer in der Längsmittelebene enthaltenen Schnittstelle 50.

Der innere Kurvenbahnträger 40 ist ferner an mehreren über seinen Umfang verteilt angeordneten Stellen mit weiteren gradlinigen, parallel zur Drehachse D angeordneten Kurvenbahnen 51 versehen. Weitere Koppelelemente 52 sind vorgesehen, die in beide Kurvenbahnen 51, 47 eingreifen und entlang dieser Kurvenbahnen verschiebbar sind. Unter einer Verschiebung des Koppelelementes 52 entlang der Kurvenbahnen 51, 47 erfolgt eine Relativdrehung zwischen den beiden Kurvenbahnträgern 39, 40. Das Koppelelement 52 bildet gemeinsam mit den Kurvenbahnen 51, 47 ein zweites Kurvenbahngetriebe 53.

Eine koaxial zur Gewindespindel 42 angeordnete Schraubenfeder 54 ist einerseits an dem Kurvenbahnträger 40 abgestützt und greift andererseits an dem Koppelelement 52 an. In der Darstellung gemäß Figur 4 ist die Schraubenfeder 54 vorgespannt und in einer Halteposition. Die Halteposition ist mittels einer Halteeinrichtung 55 gewährleistet, die dadurch gebildet ist, dass an der inneren Wandung der U-förmigen Kurvenbahn 47 eine Halteposition 56 gebildet ist. Die Halteposition 56 ist demzufolge im Bereich der Schnittstelle 50 angeordnet.

Die Schraubenfeder 54 bildet einen Energiespeicher 57, wobei die gespeicherte Federenergie unter Verrichtung von Arbeit ein Verdrehen der beiden Kurvenbahnträger 39, 40 ermöglicht, um einem Wanken entgegen zu wirken.

Solange die Schraubenfeder 54 in der Halteposition 56 des Koppelelementes 52 eingreift, ist eine Neutralposition der vorgespannten Schraubenfeder 54 eingestellt. Gemäß Figur 4 sind die beiden Koppelelemente 45 und 52 in einer Neutralposition angeordnet, in der der Aktuator 38 in einer Neutralposition gehalten, also wirkungslos ist.

Wenn nun einem Wankmoment entgegengewirkt werden soll, wird der Motor 41 mit Strom beaufschlagt, wobei der Rotor die Gewindespindel 42 in einer Drehrichtung antreibt, die ein axiales Verschieben der Spindelmutter und somit des Koppelelementes 45 entlang der S-förmigen Kurvenbahn 43 in die Richtung einleitet, die ein Verdrehen der beiden Kurvenbahnträger 38, 39 zur Folge hat.

Figur 5 zeigt eine Arbeitsposition des Aktuators 38, in der die beiden Kurvenbahnträger 39, 40, also auch die beiden Stabilisatorhälften 36, 37 relativ zueinander verdreht sind. Das Koppelelement 45 ist axial nach rechts verlagert, wobei eine Relativverschiebung des Koppelelementes 45 entlang der Kurvenbahnen 43, 44 erfolgt. Unter dieser von dem Koppelelement 45 eingeleiteten Verdrehung der beiden Kurvenbahnträger 39, 40 zueinander findet zwangsweise eine relative Verlagerung des Koppelelementes 52 gegenüber den Kurvenbahnen 47, 51 statt. Das bedeutet, dass das Koppelelement 52 seine Halteposition 56 verlässt und in den oberen Kurvenbahnschenkel 49 der U-förmigen Kurvenbahn 47 eingelenkt ist. Unter der axialen Druckkraft der Schraubenfeder 54 wird nun das Koppelelement 52 axial nach rechts gedrückt, wobei diese axiale Druckkraft über das zweite Kurvenbahngetriebe ein zwischen den beiden Kurvenbahnträgern 39, 40 wirkendes Drehmoment erzeugt. Dieses Drehmoment unterstützt das von dem ersten Kurvenbahngetriebe 46 aufgebrachte Drehmoment. Die erforderliche elektrische Leistung des Elektromotors 41 kann aufgrund der zusätzlich wirksamen Schraubenfeder 54 reduziert werden. Sobald das Wankmoment nachläßt, fährt der Motor 41 das Koppelelement 45 zurück in seine Neutralstellung, die etwa in der Mitte der S-förmigen Kurvenbahn 43 liegt. Unter diesem Verfahrweg des Koppelelementes 45 findet wiederum zwangsweise eine Relativverdrehung zwischen den beiden Kurvenbahnträgern 39, 40 statt. Dieser Relativdrehung hat ebenfalls zur Folge, dass das Koppelelement 52 zwangsweise entlang der Kurvenbahnen 51, 47 relativ verschoben wird, bis die Halteposition 46 erreicht ist. Das bedeutet, dass die Schraubenfeder 54 wieder vorgespannt wird. Die erforderliche Arbeit zum Vorspannen der Schraubenfeder 54 kann aufgebracht werden einerseits durch den Elektromotor 41, andererseits aber auch durch die Fahrwerksfedern, die nach dem Wegfall eines Wankmomentes unter Federentlastung Federenergie abgeben.

Die Gestaltung der U-förmigen Kurvenbahn 47 und der S-förmigen Kurvenbahn 43 können derart aufeinander abgestimmt werden, dass der Drehmomentverlauf zur Verdrehung der beiden Stabilisatorhälften 36, 37 an das jeweils gegebene Fahrwerk optimal angepasst ist.

Die hier vorgeschlagenen Energiespeicher sind lediglich beispielhaft erwähnt; Gasdruckfedern, hydraulische oder elektrische Energiespeicher sind ebenfalls geeignet, den regulären Stellantrieb zu entlasten. Als Stellantrieb können auch Schwenkmotoren oder Hydraulische Zylinder eingesetzt werden.

Die beschriebenen erfindungsgemäßen Wankstabilisatoren sind vorgefertigte Baueinheiten, die problemlos am Kraftfahrzeug zwischen die Stabilisatorhälften eingebaut werden können.

### Positionszahlen

- 1: Stabilisatorhälfte
- 2: Stabilisatorhälfte
- 3: Aktuator
- 4: Kurvenbahnträger
- 5: Kurvenbahnträger
- 6: Gehäuse
- 7: Elektromotor
- 8: Zapfenaufnahme
- 9: Zapfenaufnahme
- 9a: Rotor
- 10: Gewindespindel
- 11: Spindelmutter
- 11a: Stellantrieb
- 12: Schraubenfeder
- 13: Koppelelement
- 14: Stellzapfen
- 15: Radiallager
- 16: Stützrolle
- 17: Kurvenbahn
- 18: V-förmige Kurvenbahn
- 19: Kurvenbahnschenkel
- 20: Kurvenbahnschenkel
- 20a: erstes Kurvenbahngetriebe
- 21: Schnittstelle
- 22: innere Wandung
- 23: Halteposition
- 24: Plateau
- 25: Steuerung
- 26: Wippe
- 27: Wippachse
- 28: Wippenende
- 29: Wippenende
- 30: Aufnahme
- 31: Zapfen
- 32: Aufnahme
- 33: Nut
- 34: Steuerung
- 35: Stellmotor
- 36: Stabilisatorhälfte
- 37: Stabilisatorhälfte
- 38: Aktuator
- 39: Kurvenbahnträger
- 40: Kurvenbahnträger
- 41: Motor
- 42: Gewindespindel
- 42a: Stellantrieb
- 43: S-förmige Kurvenbahn
- 44: gradlinige Kurvenbahn
- 45: Koppelelement
- 46: erstes Kurvenbahngetriebe
- 47: U-förmige Kurvenbahn
- 48: Kurvenbahnschenkel
- 49: Kurvenbahnschenkel
- 50: Schnittstelle
- 51: gradlinige Kurvenbahn
- 52: Koppelelement
- 53: zweites Kurvenbahngetriebe
- 54: Schraubenfeder
- 55: Halteeinrichtung
- 56: Halteposition
- 57: Energiespeicher

## Patentansprüche

1. Wankstabilisator für das Fahrwerk eines Kraftfahrzeuges, dessen mit Fremdenergie bedarfsweise beaufschlagbarer Aktuator (3, 38) einem Wanken entgegenwirkt, **dadurch gekennzeichnet, daß** der Aktuator (3, 38) wenigstens einen zusätzlichen Energiespeicher (57) aufweist, dessen Speicherenergie dem Wanken zusätzlich entgegenwirkt.

2. Wankstabilisator nach Anspruch 1, bei der der zusätzliche Energiespeicher (57) seine Energie in einer einzigen Entspannrichtung wahlweise einem Wanken in der einen Wankrichtung oder in der entgegengesetzten Wankrichtung entgegensetzt.

3. Wankstabilisator nach Anspruch 1, bei dem der zusätzliche Energiespeicher (57) in einer Neutralposition des Aktuators (3, 38) mit Energie gefüllt ist, die unter Verrichtung von Arbeit einem Wanken entgegengesetzt wird.

4. Wankstabilisator nach Anspruch 1, bei dem eine Halteeinrichtung (23, 55) vorgesehen ist, die den Energiespeicher (57) in einer Neutralposition des Aktuators (3, 38) mit der gespeicherten Energie gefüllt hält.

5. Wankstabilisator nach Anspruch 1, bei dem der als Baueinheit ausgebildete Aktuator (3, 38) einen mit der Fremdenergie beaufschlagbaren Stellantrieb (11 a, 42a) und den zusätzlichen Energiespeicher (12, 54, 57) umfaßt.

6. Wankstabilisator nach Anspruch 2, bei dem die Baueinheit zwischen zwei Stabilisatorhälften (1, 2, 36, 37) angeordnet ist, wobei der Aktuator (3, 38) einerseits an die eine Stabilisatorhälfte (1, 36) und andererseits an die andere Stabilisatorhälfte (2, 37) angeschlossen ist.

7. Wankstabilisator nach Anspruch 3, dessen Aktuator (3, 38) eine Verdrehung um seine Drehachse zur Verdrehung der Stabilisatorhälften (1, 2, 36, 37) durchführt.

8. Wankstabilisator nach Anspruch 5, dessen zwischen Stabilisatorhälften (1, 2, 36, 37) wirksam angeordneter Aktuator (3, 38) ein dem Stellantrieb (11a, 42a) nachgeschaltetes erstes Getriebe (20a, 46) aufweist, um einen Stellweg des Stellantriebes (11 a, 42a) mit Unterstützung durch den zusätzlichen Energiespeicher (57) bedarfsweise in eine Drehbewegung umzuwandeln, unter der die Stabilisatorhälften (1, 2, 36, 37) um einen Verdrehwinkel um die Drehachse des Aktuators (3, 38) herum zueinander verdreht werden.

9. Wankstabilisator nach Anspruch 8, bei dem das erste Getriebe ein erstes Kurvenbahn-Getriebe (20a, 46) umfaßt, mit zwei den Stabilisatorhälften (1, 2, 36, 37) zugeordneten Kurvenbahnträgern (4, 5, 39, 40), in deren sich voneinander unterscheidenden ersten Kurvenbahnen (18, 43, 44) ein mittels des Stellantriebes (11a, 42a) längs dieser ersten Kurvenbahnen (18, 43, 44) verschiebbares erstes Koppelelement (13, 45) geführt ist.

10. Wankstabilisator nach Anspruch 8, bei dem ein dem zusätzlichen Energiespeicher (57) nachgeschaltetes Getriebe (20a, 53) vorgesehen ist, um einen axialen Entspannweg des zusätzlichen Energiespeichers (54, 57) in eine Drehbewegung umzuwandeln, unter der die Stabilisatorhälften (36, 37) um den Verdrehwinkel zueinander verdreht werden.

11. Wankstabilisator nach Anspruch 10, dessen Getriebe ein Kurvenbahngetriebe (20a, 53) aufweist mit zwei den Stabilisatorhälften (36, 37) zugeordneten Kurvenbahnträgern (4, 5, 39, 40), in deren sich voneinander unterscheidenden Kurvenbahnen (18, 47, 51) ein mittels des zusätzlichen Energiespeichers (57) längs dieser Kurvenbahnen (18, 47, 51) verschiebbares Koppelelement (13, 52) geführt ist.

12. Wankstabilisator nach Anspruch 11, dessen Kurvenbahngetriebe (20a, 53) eine dem einen Kurvenbahnträger (5, 39) zugeordnete etwa V- oder U-förmige Kurvenbahn (47) aufweist, deren beide Kurvenbahnschenkel (19, 20, 48, 49) spiegelsymmetrisch zu einer Drehachse des Aktuators (38) enthaltenden Längsmittelebene angeordnet sind.

13. Wankstabilisator nach Anspruch 12, bei dem sich die Kurvenbahnschenkel (19, 20, 48, 49) in einer in der Längsmittelebene enthaltenen Schnittstelle (21, 50) vereinigen.

14. Wankstabilisator nach Anspruch 11, dessen Kurvenbahngetriebe (20a, 53) eine dem anderen Kurvenbahnträger (4, 40) zugeordnete Kurvenbahn (17, 51) aufweist, die sich geradlinig parallel zur Drehachse des Aktuators (38) erstreckt.

15. Wankstabilisator nach Anspruch 13, bei der das Koppelelement (13, 52) von dem zusätzlichen Energiespeicher (57) beaufschlagt ist, wobei in einer Neutralposition des Aktuators (3, 38) das Koppelelement (13, 52) im Bereich der Schnittstelle (21, 50) angeordnet ist.

16. Wankstabilisator nach Anspruch 15, bei der eine Halteeinrichtung (23, 55) vorgesehen ist, mittels der das Koppelelement (13, 52) im Bereich der Schnittstelle (21, 50) gehalten ist.

17. Wankstabilisator nach Anspruch 5, dessen mit der Fremdenergie beaufschlagbare elektromechanische Stellantrieb (11a, 42a) einen Elektomotor (7, 41) aufweist, dessen Rotor (9a) eine mit einer Spindelmutter (11) versehene Gewindespindel (10, 42) antreibt.

18. Wankstabilisator nach Anspruch 1, bei dem der zusätzliche Energiespeicher durch ein Federelement (12, 54) gebildet ist.

19. Wankstabilisator nach Anspruch 18, bei dem das Federelement durch eine im wesentlichen koaxial zu einer Drehachse des Aktuators angeordnete Schraubenfeder (12, 54) gebildet ist, die als Zugfeder oder als Druckfeder ausgebildet ist.

## Claims

1. Roll stabilizer for the chassis of a motor vehicle, whose actuator (3, 38), which can have external energy applied to it if necessary, counteracts rolling, **characterized in that** the actuator (3, 38) has at least one additional energy storage means (57) whose stored energy additionally counteracts rolling.

2. Roll stabilizer according to Claim 1, in which the additional energy storage means (57) outputs its energy in a single stress-relief direction, selectively against rolling in one rolling direction or in the opposite rolling direction.

3. Roll stabilizer according to Claim 1, in which the additional energy storage means (57) is filled with energy, which is opposed to rolling while performing work, in a neutral position of the actuator (3, 38).

4. Roll stabilizer according to Claim 1, in which a retaining device (23, 55) is provided which holds the energy storage means (57) filled with the stored energy in a neutral position of the actuator (3, 38).

5. Roll stabilizer according to Claim 1, in which the actuator (3, 38), which is in the form of an assembly, comprises an actuating drive (11a, 42a), to which external energy can be applied, and the additional energy storage means (12, 54, 57).

6. Roll stabilizer according to Claim 2, in which the assembly is arranged between two stabilizer halves (1, 2, 36, 37), with the actuator (3, 38) being connected to one stabilizer half (1, 36) at one end and to the other stabilizer half (2, 37) at the other end.

7. Roll stabilizer according to Claim 3, whose actuator (3, 38) carries out a rotation about its rotation axis in order to rotate the stabilizer halves (1, 2, 36, 37).

8. Roll stabilizer according to Claim 5, whose actuator (3, 38), which is arranged so as to be active between stabilizer halves (1, 2, 36, 37), has a first gear mechanism (20a, 46), which is connected downstream of the actuating drive (11a, 42a), in order to convert actuating travel of the actuating drive (11a, 42a) into a rotation movement with assistance from the additional energy storage means (57) if required, with which rotation movement the stabilizer halves (1, 2, 36, 37) are rotated through a rotation angle about the rotation axis of the actuator (3, 38) in relation to one another.

9. Roll stabilizer according to Claim 8, in which the first gear mechanism comprises a first cam track gear mechanism (20a, 46), having two cam track carriers (4, 5, 39, 40) which are associated with the stabilizer halves (1, 2, 36, 37) and in whose first cam tracks (18, 43, 44), which differ from one another, a first coupling element (13, 45) which can be displaced along these first cam tracks (18, 43, 44) by means of the actuating drive (11a, 42a) is guided.

10. Roll stabilizer according to Claim 8, in which a gear mechanism (20a, 53) which is connected downstream of the additional energy storage means (57) is provided, in order to convert axial stress-relief travel of the additional energy storage means (54, 57) into a rotation movement with which the stabilizer halves (36, 37) are rotated through the rotation angle in relation to one another.

11. Roll stabilizer according to Claim 10, whose gear mechanism has a cam track gear mechanism (20a, 53) having two cam track carriers (4, 5, 39, 40) which are associated with the stabilizer halves (36, 37) and in whose cam tracks (18, 47, 51), which differ from one another, a coupling element (13, 52) which can be displaced along these cam tracks (18, 47, 51) by means of the additional energy storage means (57) is guided.

12. Roll stabilizer according to Claim 11, whose cam track gear mechanism (20a, 53) has an roughly V- or U-shaped cam track (47) which is associated with one cam track carrier (5, 39) and whose two cam track limbs (19, 20, 48, 49) are arranged with mirror-image symmetry in relation to a longitudinal centre plane which contains the rotation axis of the actuator (38).

13. Roll stabilizer according to Claim 12, in which the cam track limbs (19, 20, 48, 49) merge at a point of intersection (21, 50) which is contained in the longitudinal centre plane.

14. Roll stabilizer according to Claim 11, whose cam track gear mechanism (20a, 53) has a cam track (17, 51) which is associated with the other cam track carrier (4, 40) and which extends in a rectilinear manner parallel to the rotation axis of the actuator (38).

15. Roll stabilizer according to Claim 13, in which the coupling element (13, 52) is acted on by the additional energy storage means (57), with the coupling element (13, 52) being arranged in the region of the point of intersection (21, 50) in a neutral position of the actuator (3, 38).

16. Roll stabilizer according to Claim 15, in which a retaining device (23, 55) is provided, by means of which the coupling element (13, 52) is held in the region of the point of intersection (21, 50).

17. Roll stabilizer according to Claim 5, whose electromechanical actuating drive (11a, 42a) which can have external energy applied to it has an electric motor (7, 41) whose rotor (9a) drives a threaded spindle (10, 42) which is provided with a spindle nut (11).

18. Roll stabilizer according to Claim 1, in which the additional energy storage means is formed by a spring element (12, 54).

19. Roll stabilizer according to Claim 18, in which the spring element is formed by a helical spring (12, 54) which is arranged substantially coaxially to a rotation axis of the actuator and is in the form of a tension spring or a compression spring.

## Revendications

1. Stabilisateur anti-roulis pour le châssis d'un véhicule automobile, dont l'actionneur (3, 38), pouvant au besoin être sollicité par une énergie extérieure, agit à l'encontre d'un roulis, **caractérisé en ce que** l'actionneur (3, 38) présente au moins un accumulateur d'énergie supplémentaire (57), dont l'énergie accumulée agit aussi à l'encontre du roulis.

2. Stabilisateur anti-roulis selon la revendication 1, dans lequel l'accumulateur d'énergie supplémentaire (57) utilise son énergie dans un sens de détente unique de manière sélective à l'encontre d'un roulis dans un sens de roulis ou dans le sens de roulis opposé.

3. Stabilisateur anti-roulis selon la revendication 1, dans lequel l'accumulateur d'énergie supplémentaire (57) est rempli d'énergie dans une position neutre de l'actionneur (3, 38), cette énergie agissant à l'encontre d'un roulis en effectuant un travail.

4. Stabilisateur anti-roulis selon la revendication 1, dans lequel un dispositif de retenue (23, 55) est prévu, lequel maintient l'accumulateur d'énergie (57) rempli de l'énergie accumulée dans une position neutre de l'actionneur (3, 38).

5. Stabilisateur anti-roulis selon la revendication 1, dans lequel l'actionneur (3, 38) réalisé sous forme d'unité constructive comprend un entraînement de commande (11a, 42a) pouvant être sollicité par une énergie extérieure, et l'accumulateur d'énergie supplémentaire (12, 54, 57).

6. Stabilisateur anti-roulis selon la revendication 2, dans lequel l'unité constructive est disposée entre deux moitiés de stabilisateur (1, 2, 36, 37), l'actionneur (3, 38) étant d'une part raccordé à une moitié de stabilisateur (1, 36) et d'autre part à l'autre moitié de stabilisateur (2, 37).

7. Stabilisateur anti-roulis selon la revendication 3, dont l'actionneur (3, 38) effectue une rotation autour de son axe de rotation pour faire tourner les moitiés de stabilisateur (1, 2, 36, 37).

8. Stabilisateur anti-roulis selon la revendication 5, dont l'actionneur (3, 38) disposé de manière active entre les moitiés de stabilisateur (1, 2, 36, 37) présente un premier mécanisme (20a, 46) monté après l'entraînement de commande (11a, 42a), afin de convertir une course de commande de l'entraînement de commande (11a, 42a), avec assistance de l'accumulateur d'énergie supplémentaire (57), selon les besoins en un mouvement de rotation, qui fait tourner l'une par rapport à l'autre les moitiés de stabilisateur (1, 2, 36, 37) d'un certain angle de rotation autour de l'axe de rotation de l'actionneur (3, 38).

9. Stabilisateur anti-roulis selon la revendication 8, dans lequel le premier mécanisme comprend un premier mécanisme de piste de came (20a, 46), avec deux supports de pistes de cames (4, 5, 39, 40) associés aux moitiés de stabilisateur (1, 2, 36, 37), dans les premières pistes de cames (18, 43, 44), différentes l'une de l'autre, desquels est guidé un premier élément d'accouplement (13, 45) pouvant être déplacé au moyen de l'entraînement de commande (11a, 42a) le long de ces premières pistes de cames (18, 43, 44).

10. Stabilisateur anti-roulis selon la revendication 8, dans lequel un mécanisme (20a, 53) monté après l'accumulateur d'énergie supplémentaire (57) est prévu, afin de convertir une course de détente axiale de l'accumulateur d'énergie supplémentaire (54, 57) en un mouvement de rotation, qui fait tourner l'une par rapport à l'autre les moitiés de stabilisateur (36, 37) de l'angle de rotation.

11. Stabilisateur anti-roulis selon la revendication 10, dont le mécanisme présente un mécanisme de piste de came (20a, 53) avec deux supports de pistes de cames (4, 5, 39, 40) associés aux moitiés de stabilisateur (36, 37), dans les pistes de cames (18, 47, 51), différentes l'une de l'autre, desquels est guidé un élément d'accouplement (13, 52) pouvant être déplacé au moyen de l'accumulateur d'énergie supplémentaire (57) le long de ces pistes de cames (18, 47, 51).

12. Stabilisateur anti-roulis selon la revendication 11, dont le mécanisme de piste de came (20a, 53) présente une piste de came (47) approximativement en forme de V ou de U, associée à un support de piste de came (5, 39), dont les deux branches de piste de came (19, 20, 48, 49) sont disposées avec une symétrie spéculaire par rapport à un plan médian longitudinal contenant l'axe de rotation de l'actionneur (38).

13. Stabilisateur anti-roulis selon la revendication 12, dans lequel les branches de piste de came (19, 20, 48, 49) se réunissent en une interface (21, 50) contenue dans le plan médian longitudinal.

14. Stabilisateur anti-roulis selon la revendication 11, dont le mécanisme de piste de came (20a, 53) présente une piste de came (17, 51) associée à l'autre support de piste de came (4, 40), qui s'étend en ligne droite parallèlement à l'axe de rotation de l'actionneur (38).

15. Stabilisateur anti-roulis selon la revendication 13, dans lequel l'élément d'accouplement (13, 52) est sollicité par l'accumulateur d'énergie supplémentaire (57), l'élément d'accouplement (13, 52) étant disposé dans la région de l'interface (21, 50) dans une position neutre de l'actionneur (3, 38).

16. Stabilisateur anti-roulis selon la revendication 15, dans lequel un dispositif de retenue (23, 55) est prévu, au moyen duquel l'élément d'accouplement (13, 52) est maintenu dans la région de l'interface (21, 50).

17. Stabilisateur anti-roulis selon la revendication 5, dont l'entraînement de commande (11a, 42a) électromécanique pouvant être sollicité par une énergie extérieure présente un moteur électrique (7, 41), dont le rotor (9a) entraîne une broche filetée (10, 42) pourvue d'un écrou de broche (11).

18. Stabilisateur anti-roulis selon la revendication 1, dans lequel l'accumulateur d'énergie supplémentaire est formé par un élément à ressort (12, 54).

19. Stabilisateur anti-roulis selon la revendication 18, dans lequel l'élément à ressort est formé par un ressort à boudin (12, 54) disposé essentiellement coaxialement à un axe de rotation de l'actionneur, qui est réalisé sous forme de ressort de traction ou de ressort de compression.
